# EUROPEAN PATENT APPLICATION

(11) **EP 4 672 726 A1**
(43) Date of publication of application: **31.12.2025**
(21) Application number: 25170963.0
(22) Date of filing: 16.04.2025
(51) Int. Cl.: H04L 69/321

(54) **PROCESSING OF THE NETWORK PROTOCOL STACK**

(30) Priority: 26.06.2024 US 202418754261
(71) Applicant: INTEL Corporation, Santa Clara, CA 95054 (US)
(72) Inventor: MITTY, Harish, 560097 Bangalore (IN); RAGHUPATRUNI, Madhusudana, 560103 Bangalore (IN); HEWAVITHANA, Thushara, Chandler, 85249 (US); WONG, Samuel, San Diego, 92129 (US)
(74) Representative: Viering, Jentschura & Partner mbB Patent- und Rechtsanwälte

(57) **Abstract**

An apparatus of a communication device, the apparatus may include: a memory; and a processor configured to: receive a plurality of data packets at a layer of a network protocol stack;
determine a result, wherein the result represents whether a data packet of the plurality of data packets belongs to an application client; provide instructions to cause the memory to store the data packet within either a first buffer or a second buffer based on the result; and process, at the layer of the network protocol stack, the plurality of data packets stored in the first buffer and the second buffer.

## Description

### Technical Field

This disclosure generally relates to methods and devices for processing of the network protocol stack.

### Background

In radio communication networks in accordance with many radio communication technologies, such as Fourth Generation (LTE) and Fifth Generation (5G) New Radio (NR), various methods are employed to provide wireless data transfer with desired efficiency, speed, and reliability. Traditional radio access networks (RANs) employed integrated systems in which the entire processing with respect to transmission and reception of radio communication signals was performed. In such traditional RANs, network access nodes may implement the whole network stack including physical layer (PHY), media access control (MAC), radio link control (RLC), and packet data convergence control (PDCP).

The increasing demand for data-intensive applications and services in radio communication networks has led to the development of various technologies to enhance efficiency, speed, and reliability associated with the communication. One of these approaches is edge computing, which may involve processing data closer to the source of generation, which may result in reduced latency and bandwidth requirements. Another approach directed to radio communication networks is the Virtualized Radio Access Network (vRAN). vRAN may be considered as a software-defined, cloud-native approach that may decouple the radio access network from proprietary hardware at an extent in order to obtain greater flexibility, scalability, and resource efficiency. The vRAN may enable the deployment of network functions on standard servers, for the purpose of reducing costs and increasing the ability to adapt to changing network demands.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an illustrative example of an architecture of a network;
FIG. 4 shows an illustrative example of an application layer architecture of a network;
FIG. 5 shows an example of a network protocol stack in accordance with various aspects described herein;
FIG. 6 shows an example of an apparatus for a communication device according to various examples in this disclosure;
FIG. 7 shows an illustrative example of a layer-3 processing of the network protocol stack;
FIG. 8 shows an illustrative example of a layer-2 processing of the network protocol stack
FIG. 9 shows an illustrative example of a layer-1 processing of the network protocol stack
FIG. 10 shows an illustrative example of data flow between the UPF and the UE in accordance with various aspects described herein;
FIG. 11 shows an exemplary radio access network architecture in which the radio access network is disaggregated into multiple units;
FIG. 12 shows an example of a method.

### Description

The following detailed description refers to the accompanying drawings that show, by way of illustration, exemplary details and aspects in which aspects of the present disclosure may be practiced.

In conventional cellular systems like 2G/3G, the signal processing for each cell is restricted to fixed hardware resources such as BTS (Base Transceiver Station). In 3G/4G, a disaggregation of a single radio network access node has been introduced by including RRUs (Remote Radio Unit) and BBUs, which is followed by the O-RAN architecture for 4G/5G/6G, in which the disaggregation involves O-RUs, O-DUs, and O-CUs.

Furthermore, virtualized RAN (vRAN) concept has been introduced, which may also be considered to include aspects associated with the disaggregation and virtualization of various components of the conventional RAN. In the vRAN concept, various functions performed by hardware specific elements are virtualized and converted into software-based functionalities operable on standard hardware platforms. The previously introduced hardware components such as RRUs and BBUs have been separated into software-based entities. The vRAN concept further includes standardized and open interfaces for interoperability between different hardware platforms independent from vendor-specific implementations for a more open and flexible network ecosystem.

A distributed system, in accordance with various aspects of this disclosure, may be deemed as a system including a plurality of components that are located on different devices, in particular computing devices, that are configured to communicate with each other to achieve a common goal. The communication between components may be provided by the respective computing devices communicating signals and/or messages. Edge computing is a type of computing over a distributed system, which intends to bring computation and data storage closer to one or more sources of data to be computed, thereby reducing the volumes of data to be moved to provide lower latency and reduce transmission costs.

Edge networks may be used to implement the framework required to provide edge computing in a network. Edge networks aim for provisioning of network core and edge segments with an intention to optimize delivery of resources and configured to manage entities that are used by edge computing. Various configurations may be used to provide an edge network, such as an Edge, a Fog, a mobile or multi-access edge computing (MEC), or an IoT network. In various examples, an edge network may be configured to provide a service within the edge network (e.g. via an edge application), which is also configured to communicate with a cloud network or a cloud structure. In various examples, at least a portion of the edge network may include, or may be coupled to, a portion of a cloud network, or a further network, such as a radio access network, internet, etc.

In particular, in the context of radio access technologies, the Edge Computing (which may also be referred to as Network Edge Computing) may enable various operator or 3^{rd}-party related services to be hosted close to network access nodes serving to UEs to achieve an efficient service delivery due to obtained reduced end-to-end latency and load. In accordance with various aspects described herein, the desire to achieve efficient service delivery through the Edge Computing may particularly be directed to user plane data. The rapid growth of data-intensive applications and the increasing demand for low-latency services may lead to a significant shift towards edge computing. Edge computing may include processing user plane data closer to its source to reduce latency and improve overall network performance associated with the user plane data. In this context, the User Plane Function (UPF) may play a critical role in managing user data and ensuring efficient packet routing.

The UPF is a fundamental network function (NF) component of cellular network architectures (e.g. the 5G core network architecture). The UPF may be responsible for handling user data and may play a key role in the data plane evolution of the Control and User Plane Separation (CUPS) strategy. The UPF may be particularly configured for packet routing and forwarding, packet inspection, Quality of Service (QoS) handling, and other functions.

Through the packet routing and forwarding of the UPF, the UPF may route and forward user data packets between the RAN and the Data Network (DN). Furthermore, the UPF may perform packet inspection to enforce QoS policies, detect anomalies, and ensure security. The UPF may further be configured for QoS handling, including policing, shaping, and marking of user data packets, and may interact with the Session Management Function to manage and maintain user sessions. In various aspects described herein, the UPF may be co-located with edge computing platforms to enable low-latency and high-bandwidth applications.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3 GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 4G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 690-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 600 MHz bands, bands within the 24.25-86 GHz range, etc.), spectrum made available under FCC's "Spectrum Frontier" 4G initiative (including 27.5-28.35 GHz, 29.1-29.25 GHz, 31-31.3 GHz, 37-38.6 GHz, 38.6-40 GHz, 42-42.5 GHz, 47-64 GHz, 64-71 GHz, 61-76 GHz, 81-86 GHz and 92-94 GHz, etc.), the ITS (Intelligent Transport Systems) band of 4.9 GHz (typically 4.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 60.2 GHz-71 GHz band, any band between 65.88 GHz and 61 GHz, bands currently allocated to automotive radar applications such as 66-81 GHz, and future bands including 94-300 GHz and above. Furthermore, the apparatuses and methods described herein can also employ radio communication technologies on a secondary basis on bands such as the TV White Space bands (typically below 690 MHz) where e.g. the 400 MHz and 600 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

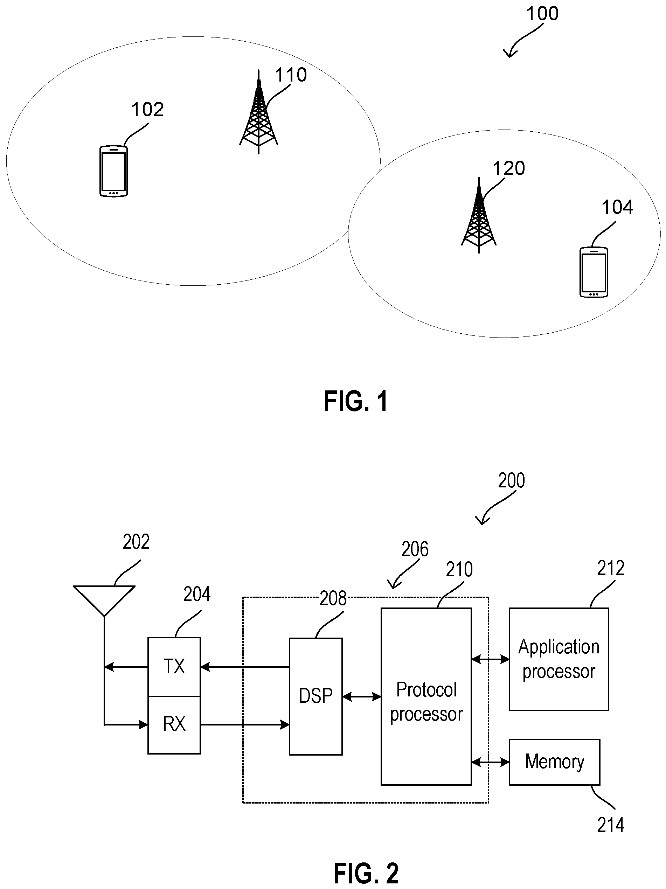

FIGs. 1 and 2 depict a general network and device architecture for wireless communications. In particular, FIG. 1 shows exemplary radio communication network 100 (e.g. a cellular communication network) according to some aspects, which may include terminal devices 102 and 104 and network access nodes 110 and 120. Radio communication network 100 may communicate with terminal devices 102 and 104 (i.e. mobile radio communication devices) via network access nodes 110 and 120 (i.e. radio communication devices) over a radio access network. Although certain examples described herein may refer to a particular radio access network context (e.g., LTE, UMTS, GSM, other 3rd Generation Partnership Project (3GPP) networks, WLAN/WiFi, Bluetooth, 4G NR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station) (BSs), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include LTE, UMTS, GSM, 5G/NR, 6G, WiMAX, Bluetooth, WiFi, mmWave, etc., any of which may be applicable to radio communication network 100.

In various aspects, network access nodes 110 and 120 may include one or more CUs, one or more DUs, and one or more RUs to communicate with terminal devices 102 and 104. In various examples, an RU may include a device configured to implement various processing functions for RF. In particular the RU may implement functions of a lower PHY. A DU may include a device configured to implement various processing functions, in particular including functions of a higher PHY, MAC, and RLC. The skilled person may realize that this is one example of a split of the network stack and DUs and RUs may have different split configurations. The RU may be linked to terminal devices 102 and 104 over a radio connection, and to the DU over a fronthaul interface.

In various examples, the fronthaul interface may be according to a Common Public Radio Interface (CPRI) or an Enhanced Common Public Radio Interface (eCPRI) configured to communicate over a connection via fiber optic cables, but there are also other communication mediums that may handle the fronthaul communication. In any event, the RUs may be serving a plurality of terminal devices, and there may be limitations in terms of link capacity and bandwidth with respect to the communication between the RUs and a corresponding DU over the fronthaul. It may desirable to address some of the fronthaul limitations.

FIG. 2 shows an exemplary internal configuration of a communication device according to various aspects provided in this disclosure. The communication device may include various aspects of communication devices (e.g. network access nodes 110, 120, BBUs, CUs, DUs or RUs, noting that some of the components described herein may differ) or various aspects of mobile radio communication devices (e.g. terminal device 102, 104) described in this disclosure. The communication device 200 may include a communication interface that may optionally include an antenna system 202 and a radio frequency (RF) transceiver 204, a baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over a communication interface. The communication interface, for a radio communication device, may include antenna system 202 and RF transceiver 204 to transmit and receive radio signals according to the formatting and scheduling parameters defined by each communication protocol. The skilled person may recognize that the communication device 200 may include another communication interface to perform communication with other communication devices within the communication network. Although various practical designs may include separate communication components for each supported communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

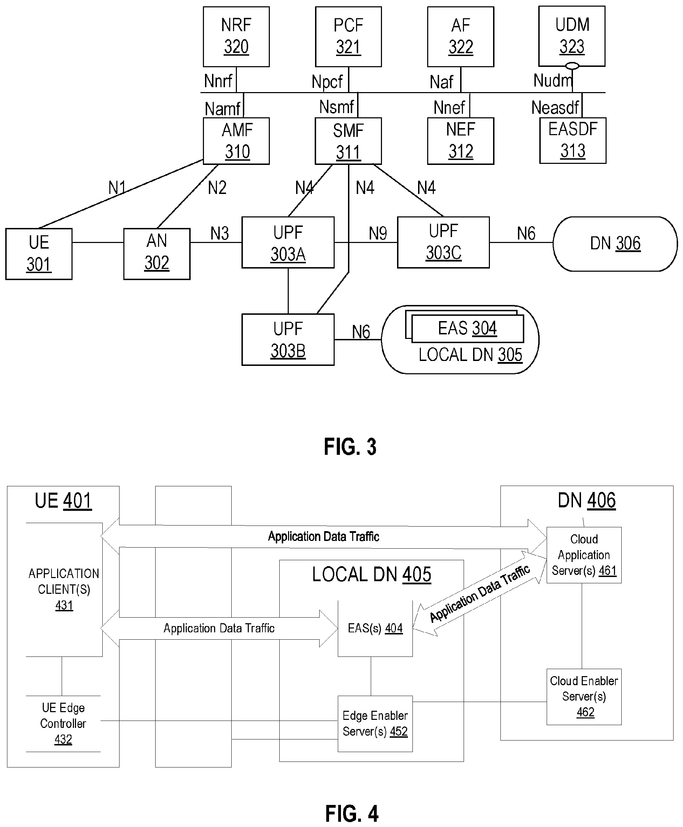

FIG. 3 shows an illustrative example of an architecture of a network. The network 300 has been illustrated as a 5G network. The network 300 may include any one of these entities (e.g. devices, NFs), noting that some of these entities may be optional in accordance with various aspects described herein. The figure further illustrates various interfaces configured to connect these entities with each other, some of which may be described below. The network 300 may include a user equipment (UE) 301. The UE 301 may be a terminal device as described herein (e.g. terminal devices 102 and 104) that connects to the cellular network to access services and communicate with other devices. The UE 301 may be communicatively coupled to an access node (AN) 302 (e.g. network access nodes 110 and 120) via a radio communication interface. The AN 302 may include RAN components, such as base stations and radio controllers configured to provide wireless connectivity between the UE 301 and the core network. The AN 302 may be connected to the AMF 310 and the core network via corresponding (N2, N3) interfaces. The UE 301 may further communicate with the AMF 310 via N1 interface.

The UPF 303A, 303B, 303C may be the network function responsible for handling user data traffic as described herein. In particular, the UPF may be provided as a first UPF 303A which may be an Uplink Classifier (UL CL) Branching Point (BP) UPF, which may be configured to inspect and classify uplink traffic and selectively steer traffic flows, which may be based on configured rules, towards a local data network 305. A second UPF 303B may be a local PDU Session Anchor UPF, which may be configured to terminate the PDU layer for data sessions for low latency access to edge computing services. A third UPF 303C may be a central PDU Session Anchor UPF, which may be configured to terminate the PDU layers for other data sessions that may not require edge computing. In accordance with various aspects described herein, a reference to the UPF in this description may refer to any one of the UPFs 303A, 303B, 303C, and in particular may refer to the first UPF 303A and/or the second UPF 303B.

The Local DN 305 may refer to a local data network. The Edge Application Server (EAS) may be one or more servers located at the network edge, which may be configured to host and run edge computing applications. The EAS may be connected to the network 300 through the Local DN 305 via N6 interface. The Data Network (DN) 306 may include the external data network, such as the internet or a private network, to which the cellular network is connected for data communication and access to external services (e.g. that are not edge services) via the N6 interface.

The network 300 may further include the Access and Mobility Management Function 310 which may be configured to manage the registration, connection, and mobility of the UE 301 within the network 300. The AMF 300 may perform various tasks including authentication, security, and mobility management via the N1 and N2 interfaces. The Session Management Function (SMF) 311 may be configured to manage the establishment, modification, and release of data sessions for the UE 301. The SMF 311 may perform various tasks including session creation, quality of service enforcement, and policy control via the N4 interface. The Network Exposure Function (NEF) 312 may be configured to facilitate a secure and controlled way for third-party applications to access network services and capabilities. The NEF 312 may act as an intermediary between the core network and external applications via the Nnef interface. The Edge Application Server Discovery Function (EASDF) 313 may be configured to facilitate the discovery of Edge Application Servers (EAS) for edge computing applications. The EASDF 313 may illustratively provide IP addresses of relevant EAS instances to the application clients (ACs).

Furthermore, the network 300 may include the NF Repository Function (NRF) 320 that may provide a repository service for storing and managing NF profiles and their supported services and may enable other NFs to discover and communicate with each other. The Policy Control Function (PCF) 321: The PCF may be configured for providing policy rules to control the behavior of network functions related to data plane events and may manage and enforces policies in this context. The Application Function (AF) 322 may be configured to interact with the core network to provide services to end-users and may influence traffic routing and resource allocation for specific applications or services. The Unified Data Management (UDM) 323 may be configured to act as a centralized repository for user data, including subscription information, authentication credentials, and access rights and may provide user data to other network functions.

One of the aspects in network access architecture design, particularly in cellular networks such as 5G, may be to bring the UPF closer to the edge computing layer, illustratively via the UPF 303A and 303B. This approach may aim to reduce latency and improve responsiveness for applications and services by processing data packets closer to the end-user. By deploying the UPF at or near the edge computing infrastructure, intelligent packet filtering and routing can be applied, ensuring that packets are processed and forwarded to their destination servers more efficiently.

The UPF deployed at the edge computing layer may typically be a local site Packet Data Network (PDN) Serving Anchor (PSA), which may act as a local breakout point for user data traffic. This local UPF may connect to other UPFs located at more centralized sites (e.g. the UPF 303C), forming a distributed architecture. This distributed approach may allow for optimized data paths and reduces the distance that data needs to travel, further contributing to lower latency and improved performance.

While bringing the UPF closer to the edge computing layer may be a significant improvement, this approach does not address the potential delay that can occur at the RAN layer, specifically between the UE and the AN (e.g. gNB). The radio communication interface may introduce a delay that can range from 1 to 2 milliseconds (ms) for a single packet transmission. If the delay at the RAN layer is not addressed the overall latency experienced by packets is affected. The initial 1-2 ms delay at the radio communication interface can potentially double or triple at higher layers of the protocol stack. As the packets traverse through subsequent layers, this delay can increase even further, potentially reaching 10 times or more of the initial RAN delay.

In this context, it is further to be noted that there is a lack of effective mechanisms to ensure low latency for regular enhanced Mobile Broadband (eMBB) connections and the absence of AC specific latency considerations in the existing protocol stack implementation. While cellular networks, such as 5G, may support Ultra-Reliable Low-Latency Communication (URLLC) for mission-critical applications, regular eMBB connections, which may cater to multimedia and broadband services, may not currently have dedicated provisions for low-latency guarantees. Even with the use of QoS Flow Identifiers (QFIs) across different PDU sessions, which may allow for packet prioritization, there is no guaranteed mechanism to ensure consistently low latency for eMBB traffic. Even though specific latency considerations towards individual ACs may be considered, the current implementation of the Layer 1 (L1) and Layer 2 (L2) interface does not seem to incorporate any parameters or mechanisms that consider AC-specific latency commitments. The lack of consideration for AC-specific latency requirements in the lower layers of the protocol stack may lead to suboptimal performance and higher latencies for delay-sensitive applications, even when using eMBB connections.

Various aspects described herein to address one or a combination of the issues discussed above. In accordance with various aspects provided herein, a buffer-based processing that may separate processing of AC-specific data packets and non-AC data packets in designated separate buffers may be considered. Such a separate buffer-based processing may allow the processing a particular processing allocated for processing of the AC-specific data packets at respective layers, which may be illustratively prioritized over processing of non-AC data packets.

FIG. 4 shows an illustrative example of an application layer architecture of a network. The network depicted here may be the network 300. The network may include UE 401 (e.g. the UE 301) configured to communicate with a local DN 405 (e.g. the local DN 405) and a DN 406 (i.e. a further DN, a cloud DN, e.g. the DN 406) at the application layer of the network protocol stack over network entities 402. Illustratively, the network entities depicted herein may include an access node (e.g. the AN 302) and an NF configured to handle user data traffic (e.g. the UPF 303A-C). In some examples, entities and functions in FIG. 4 may be connected to each other as depicted herein.

Illustratively, at uplink direction the UE 401 may transmit communication signals including application layer data. The AN may receive the communication signals and perform network protocol stack processing by processing data in various layers (e.g. PHY, MAC, RLC, PDCP) and send data packets including the application layer data to a UPF configured to handle sending data packets including the application layer data to the local DN 405 or to the DN 406. Illustratively, at downlink direction the UE 401 may receive communication signals including application layer data. The AN may transmit the communication signals after performing network protocol stack processing by processing data in various layers (e.g. PDCP, RLC, MAC, PHY) using data packets received from a UPF. The UPF may be configured to receive data packets including the application layer data from the local DN 405 or the DN 406 and forward them to the AN for transmission over the radio communication interface to the UE 401.

The UE 401 may include a processor to implement and execute application clients (ACs) 431. An AC 431 may refer to an application (i.e. software or firmware) resident in the UE performing a client function of a client-server model. Illustratively, an AC 431 may be considered as a software component configured to interact with applications and/or services that may be hosted at the edge computing structure (e.g. the local DN 405) or the cloud computing structure (e.g. the DN 406). Illustratively, the AC 431 may act as a client and a corresponding application (e.g. software) and/or service hosted at the edge or cloud computing structure may act as a server.

The UE 401 may further include a UE Edge Controller 432 that the processor of the UE 401 may implement and execute. For example, the UE Edge Controller 432 may be an Edge Enabler Client (EEC). Illustratively, the UE Edge Controller 432 be a software component or application resident in the UE, which may be configured to provide supporting functions needed for the ACs 431 to interact with the EAS 404 and the local DN 405. Illustratively, the UE Edge Controller 432 may act as a client, and the corresponding EES hosted at the edge computing structure may act as a server. The UE Edge Controller 432 may act as an intermediary between the ACs 431 and the Edge Enabler Layer that may be provided between the ACs 431 and the transport layer of the network protocol stack. The UE Edge Controller 432 may be configured to retrieve configuration information to enable exchange of application data traffic between the ACs 431 and the EAS 404. The UE Edge Controller 432 may discover available EASs 404 in the local DN 405, may initiate handover between EESs in response to detected UE mobility events.

The local DN 405 may include one or more EASs 404. An EAS 404 may refer to an Edge Application Server, as an application server resident in the Edge Hosting Environment, illustratively in the local DN 405. A processor of the local DN 405 may implement an EAS 404. The EAS 404 may act as a server of the client-server model associated with the ACs 431. The EAS 404 may perform server functions, and the ACs 431 may connect to the EAS 404 in order to access and utilize the services or applications hosted by the EAS 404. The EAS 404 may also consume 3GPP core network capabilities to facilitate communication between the application and/or services implemented by the EAS 404 and the ACs 431. Illustratively, there may be application data traffic between the ACs 431 and the EASs 404 to exchange application layer data through 3GPP core network functions (e.g. through UPF and the AN).

The local DN 405 may further include an Edge Enabler Server (EES) 452 that may be a server component that facilitates the interaction between the ACs 431 and the EASs 404. The EES 452 may enable the ACs 431 to connect to the EASs 404 by registering and dynamically instantiating the EASs 404 as needed. The EES 452 may also support application context relocation, allowing the transfer of application context between EASs 404 to maintain service continuity during events such as user mobility. The EES 452 may provision edge configuration information to the EEC 432, support registration, application layer interface (API) exposing functions and may interact with 3GPP core network.

The DN 406 may include Cloud Application Servers 461. The Cloud Application Server 461 may refer to an application server hosted in a cloud computing structure or environment. Similar to the EAS 404, the Cloud Application Server 461 may perform server functions, and the ACs 431 may connect to the Cloud Application Server 461 to access and utilize the services or applications hosted in the cloud. Illustratively, there may be application data traffic between the ACs 431 and the Cloud Application Servers 461 to exchange application layer data through 3GPP core network functions (e.g. through UPF and the AN).

The DN 406 may further include Cloud Enabler Servers 462. A Cloud Enabler Server 462 may be a server component that facilitates the interaction between the ACs 431 and the Cloud Application Servers 462, similar to the role of the Edge Enabler Server (EES) in the local DN 405. The Cloud Enabler Server 462 may enable the ACs 431 to connect to the Cloud Application Servers 462, manage the registration and instantiation of the Cloud Application Servers 462, and support application context transfer between Cloud Application Servers 462 as needed.

In accordance with various aspects described herein, each entity described in FIG. 4 may be associated with a corresponding identifier identifying the respective entity. In particular, each AC 431 may be identified by a corresponding identifier, which may be referred to as an Application Client ID (ACID). An ACID may identify an AC 431 of the ACs 431. Illustratively, the ACID may identify the client side of a particular application (i.e. software). For a UE, the ACID may illustratively be a pair of an identifier of the operating system of the UE 401 and an identifier of an application. Similarly, the UE 401 may be identified with a UE ID, each network entity of the network entities may be identified with respective identifiers (e.g. AN ID, UPF ID, etc.).

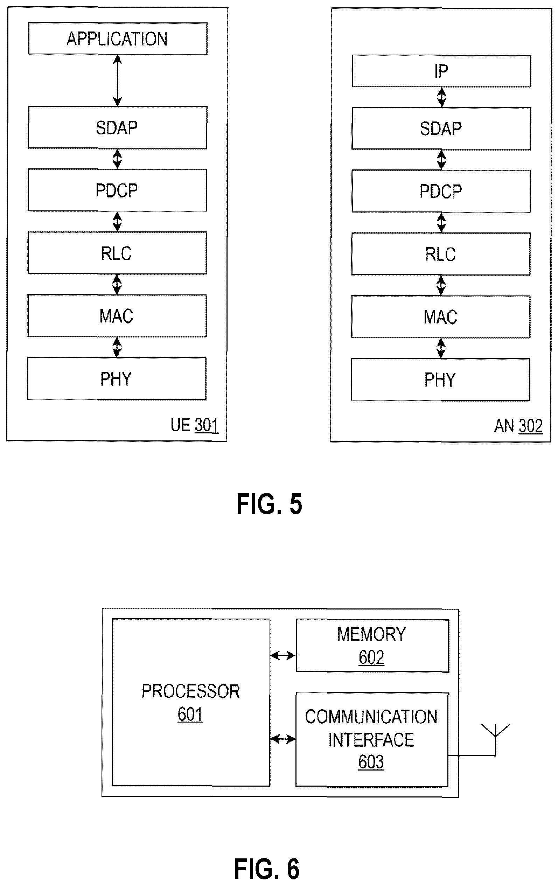

FIG. 5 shows an example of a network protocol stack in accordance with various aspects described herein. The network protocol stack may be a network protocol stack for a user plane for the exchange of application data, for example illustrated with application data traffic in FIG. 4. A processor (e.g. one or more processors) may implement aspects described herein for each layer of the network protocol stack described herein. Illustratively, a UE (e.g. the UE 301, the UE 401) and/or an AN (e.g. the AN 302) may include the processors Each layer described herein may correspond to respective functions designated within the network protocol stack, and may be referred to as layer functions (illustratively PHY functions for PHY, MAC functions for MAC, etc.). The network protocol stack may include layers referred to as PHY, MAC, RLC, PDCP, and SDAP.

It is to be noted that aspects with respect to processing of the network protocol stack may be implemented by multiple units configured to process the network protocol stack in portions. Illustratively, a device may include multiple processor and memory components to disaggregate the processing of the network protocol stack. For example, a processor and a memory of the device may process a first portion of the protocol stack (e.g. one or more layers) and a further processor and a further memory of the device may be used for processing a second portion of the protocol stack different from the first portion. The processor and the further processor may communicate with each other to implement aspects described herein. Furthermore, the network may include disaggregated units which may share processing of different portions of the network protocol stack, which may be illustratively described in O-RAN architecture related examples.

Illustratively, at the application layer, the processor may perform various operations (e.g. illustratively described for the application processor 212). In particular, for UE case, the processor may implement one or more ACs (the ACs 431) 531 that may communicate with one or more EASs (e.g. the EASs 451) or with one or more Cloud Application Servers 561 (the Cloud Application Servers 461) by exchanging AC data at application layer (i.e. application layer data depicted as application data traffic). For a local DN or a DN, the processor may implement EASs or Cloud Application Servers. For an AN, the processor may obtain the application layer data in application data packets from a UE or from the local DN or the DN. The data unit at the application layer may be referred to application data, application layer data, or Application Protocol Data Unit (APDU).

At the SDAP, the processor may perform SDAP functions, which may cause the processor to map Quality of Service (QoS) flows to appropriate data radio bearers (DRBs). Through SDAP functions, the processor may identify QoS flow associated with each incoming data packet based on a QoS flow identifier (QFI) of the respective data packet, the processor may map the identified QoS flow to a suitable DRB based on a designated configuration that may include predefined rules and QoS requirements, the processor may add a QFI field to a packet header for uplink transmissions, and/or the processor may map forward the data packets to the lower PDCP layer, grouped by their respective DRBs. The data unit at the SDAP layer is called the SDAP Service Data Unit (SDAP SDU). In some examples, the SDAP may receive and/or provide data packets to the application layer or to an IP layer.

In the uplink direction, the SDAP at the UE may receive the SDAP Service Data Unit (SDAP SDU) from the application layer, which may include user data (e.g. AC specific data) such as video or web traffic. The SDAP may add an SDAP header to the SDU, forming an SDAP Protocol Data Unit (SDAP PDU), which may then be sent to the PDCP. Conversely, in the downlink direction, the SDAP at the UE may receive SDAP PDUs from the PDCP, remove the SDAP header, and deliver the obtained SDAP SDUs to the application layer.

At the AN, the SDAP may handle the SDAP PDUs received from the PDCP. The SDAP may remove the SDAP header to obtain the SDAP SDUs, which may represent the application data. The SDAP may map the QoS flows carried in the SDAP SDUs to the appropriate data radio bearers (DRBs) based on QoS requirements. The AN SDAP layer may then forward the SDAP SDUs to the next hop, such as the UPF, for further processing and delivery to application servers.

At the PDCP, the processor may perform PDCP functions, which may cause the processor to perform one or a combination of the following: compress and decompress packet headers using designated methods to reduce overhead for transmission, cipher and decipher user data for secure communication, perform integrity protection by calculating and verifying integrity protection information, maintain sequence numbers and ensure in-order delivery of packets to the upper layers, and/or detect and eliminate duplicate packets. The processor may further process control plane data, if applicable, following separate rules for handling signaling traffic.

In the uplink direction, the PDCP at the UE may receive PDCP SDUs from the SDAP. The PDCP may perform header compression, and add encryption and integrity protection. These processed data packets may then be packaged into PDCP PDUs and sent to the RLC. For the downlink, PDCP at the UE may receive PDCP PDUs from the RLC, perform decryption and integrity verification, decompress the headers, and then deliver the PDCP SDUs to the SDAP.

At the AN, the PDCP may receive SDAP PDUs from the SDAP in the uplink direction, apply header compression, encryption, and integrity protection, and forward them as PDCP PDUs to the RLC. For the downlink direction, PDCP PDUs may be received from the RLC, where the PDCP layer may handle decompression, decryption, and integrity checks, before passing the PDCP SDUs to the SDAP.

At the RLC, the processor may perform RLC functions, which may cause the processor to perform one or a combination of the following: segment and reassemble upper layer data into suitable sizes for transmission over the radio communication interface, retransmit lost or corrupted data to ensure delivery, reorder received packets to restore the original sequence before delivering to higher layers, implement flow control and buffer management mechanisms, and/or perform error detection and recovery operations.

For the uplink direction at the UE, the RLC may receive PDCP PDUs from the PDCP. The RLC may segment these PDCP PDUs if they are too large to be transmitted at once, add error correction codes, and form RLC PDUs, which may then be sent to the MAC. In the downlink direction, the RLC may receive RLC PDUs from the MAC, reassemble any segmented PDUs, correct errors using ARQ if necessary, and pass the reassembled PDCP PDUs to the PDCP.

At the AN, the RLC may receive PDCP PDUs from the PDCP, perform segmentation, add error correction codes, and create RLC PDUs to send to the MAC in the uplink direction. In the downlink direction, the RLC at the AN may receive RLC PDUs from the MAC, reassemble them if needed, correct errors, and deliver the PDCP PDUs to the PDCP.

At the MAC layer, the processor may perform MAC functions, which may cause the processor to perform one or a combination of the following: multiplex and demultiplex logical channels onto transport channels for radio resources, schedule and prioritize data transmissions based on QoS requirements and resource availability, implement Hybrid Automatic Repeat Request (HARQ) techniques for error correction and retransmissions, handle random access procedures for initial access and synchronization with the network, and perform measurement reporting and power control functions for optimized radio performance.

In the uplink direction at the UE, the MAC may receive RLC PDUs from the RLC. The MAC may be responsible for multiplexing these data units from various logical channels, managing radio resources, and scheduling transmissions. The MAC PDUs may then be passed to the PHY for transmission over the radio communication interface. In the downlink direction, the MAC may receive MAC PDUs from the PHY, demultiplex them, and deliver the RLC PDUs to the RLC.

At the AN, the MAC may handle the uplink MAC PDUs received from the PHY, demultiplex them, and forward the RLC PDUs to the RLC. For the downlink direction, the MAC may receive RLC PDUs from the RLC, schedule them for transmission, multiplex them, and send the MAC PDUs to the PHY for radio transmission.

At the PHY, the processor may perform PHY functions, which may cause the processor to perform one or a combination of the following: modulate and demodulate baseband signals for transmission and reception over the air interface, apply channel coding and decoding techniques, such as LDPC or Polar coding, perform antenna mapping and beamforming operations, implement synchronization and cell search procedures, conduct measurements and reporting of channel conditions and signal quality.

In the uplink direction, the PHY at the UE may receive MAC PDUs from the MAC layer. It may perform tasks such as modulation and coding, converting these data units into radio signals for transmission over the air. In the downlink direction, the PHY may receive radio signals, demodulate and decode them, converting them back into MAC PDUs which may then be sent to the MAC.

At the AN, the PHY may perform similar functions. In the uplink direction, it may receive radio signals from the UE, demodulate and decode them into MAC PDUs, and deliver these to the MAC. For the downlink direction, the PHY may receive MAC PDUs from the MAC, modulate and encode them into radio signals, and transmit them to the UE.

FIG. 6 shows an example of an apparatus for a communication device according to various examples in this disclosure. The apparatus 600 may be a communication device (e.g. the communication device 200) described in accordance with the aspects described herein, in particular, the apparatus 600 may be for a BS (e.g. the AN 302). The apparatus 600 may include a processor 601, a memory 602, and a communication interface 603 configured to receive and transmit communication signals in order to communicate with further entities within the cellular network including the radio access network. The processor 601 may be configured to process the network protocol stack of the radio access network as described in accordance with FIG. 5. These may include, processing of the PHY layer, processing for the MAC layer to multiplex and demultiplex logical channels onto transport channels, processing for the RLC layer to handle segmentation, concatenation, and retransmissions, processing for the PDCP layer to perform header compression, ciphering, and reordering, and processing for the SDAP layer to map QoS flows to appropriate data radio bearers.

The processor 601 may include one or more processors, which may include a baseband processor and an application processor (e.g. application processor 212, baseband modem 206). In various examples, the processor 601 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 601 may be implemented in one processing unit, e.g. a system on chip (SOC), or a processor. In accordance with various examples, the processor 601 may further provide further functions to process received communication signals. The memory 602 may store various types of information required for the processor 601, or the communication interface 603 to operate in accordance with various aspects of this disclosure.

The communication interface 603 may include one or more signal paths to carry communication signals. The communication interface 603 may include one or more transceivers configured to transmit and receive communication signals in order to communicate with the UE (e.g. the UE 401) and further entities within the cellular network (e.g. the UPFs 303, the local DN 305, the DN 306) including the RAN. The processor 601 may provide processing of a plurality of data packets to be transmitted by the communication device including the apparatus 600 and/or a plurality of data packets received by the communication device. The processor 601 may process the plurality of data packets according to the network protocol stack.

To communicate with the UE, the communication interface 603 may include components corresponding to the protocol layers as illustratively described in FIG. 5, for the exchange of data and control signaling between the UE and the network. For example, the communication interface may include components for the PHY layer to modulate and demodulate radio signals over the radio communication interface between the UE and the BS. Illustratively, the communication interface 603 may include an RF transceiver (e.g. the RF transceiver 204) to transmit and receive radio communication signals.

To communicate with the further entities of the network, such as UPF, local DN, DN, and the broader cellular network, the communication interface 603 may include transceivers configured to communicate via additional interfaces and protocols, such as the N3 interface to connect the BS to the UPF for forwarding user plane data, the N2 interface for control plane communication with the Access and Mobility Management Function (AMF), and the Xn interface for interconnecting with other BSs for functions like handover management. Illustratively, these transceivers may include components to facilitate high-speed wired connections, such as fiber optic cables or high-bandwidth microwave links for communication with the further entities of the network.

At each layer of the network protocol stack, the processor 601 may perform layer-specific processing on data units received from the upper layer or the communication interface 603. To facilitate this processing, the apparatus 600 may utilize buffers to temporarily store and manipulate the data units as they traverse the protocol stack.

For example, at the SDAP layer, the processor 601 may receive SDAP SDUs from the application layer in the downlink direction. The processor 601 may cause the received SDAP SDUs to be stored in designated buffers within the memory 602. The processor 601 may then perform SDAP functions on the buffered data, such as mapping QoS flows to appropriate data radio bearers, adding QFI fields to packet headers, and grouping the SDAP SDUs by their respective DRBs. The processor 601 may further cause SDAP PDUs obtained through the SDAP processing to be placed in further buffers or may use the existing buffers by modifying information stored.

For example, at the PDCP layer, the processor 601 may receive PDCP SDUs from the lower SDAP layer. The processor 601 may cause these PDCP SDUs to be stored in designated buffers within the memory 602. The processor 601 may then perform PDCP functions on the buffered data, such as header compression, ciphering, integrity protection, and sequence numbering. The processor 601 may further cause resulting PDCP PDUs to be placed in new buffers or may use the existing buffers by modifying stored information, ready for processing by the next lower layer.

Illustratively, the processor 601 and the memory 602 may perform above-mentioned buffer-based processing at each layer of the network protocol stack, with the processor 601 performing operations specific to respective layers of the network protocol stack on respective buffered data units received from the upper layer. The buffers may serve as temporary storage areas, allowing the processor 601 to read, modify, and write the data units as required respective layer functions.

In accordance with various aspects described herein, the processor 601 may identify an AC specific data packet from the data packets to be transmitted by the communication device and/or from the data packets to be received by communication device. An AC specific data packet may be a data packet including information sent by the AC to a further network entity, such as the EAS or the Cloud Application Server. Additionally, or alternatively, an AC specific data packet may be a data packet including information sent to the AC by the further network entity. Illustratively, the processor 601 may determine a result that is representative of whether a data packet belongs to an AC or not. For example, for each received data packet of the plurality of data packets or additionally or alternatively for each received data packet of the plurality of data packets that fulfills configured criteria, the processor 601 may determine a respective result for each received data packet that indicates whether the respective received data packet is an AC specific data packet or non-AC data packet. In various examples, the received data packet referred to herein may be a data packet at a specific layer of the network protocol stack, such as SDAP PDU and/or SDU, PDCP PDU and/or SDU, RLC PDU and/or SDU, MAC PDU and/or SDU, PHY PDU and/or SDU, etc. The processor 601 may, for example, classify each received data packet of the plurality of data packets into first data packets (e.g. AC-specific data packets) and into second data packets (e.g. non-AC data packets).

The memory 602 include designated buffers to temporarily store and data units corresponding to data packets as the data packets traverse the protocol stack. In accordance with various aspects described herein, the processor 601 may configure the memory 602 to include separate buffers, illustratively, an AC-specific buffer (i.e. a first buffer) and a non-AC buffer. The processor 601 may instruct the memory 602 to store the AC-specific data packets into the first buffer. The processor 601 may further store the non-AC data packets into a second buffer. Illustratively, the processor 601 may allocate the first buffer from the memory 602 for storing AC-specific data packets. The first buffer may be dedicated for AC-specific data packets. The processor 601 may further allocate the second buffer from the memory 602 for storing non-AC data packets. The processor 601 may cause the memory 602 to store AC specific data packets within the AC-specific buffer for buffer-based processing at the respective layer.

The processor 601 may further cause the memory 602 to store non-AC data packets within the non-AC buffer for the buffer-based processing at the respective layer. In some examples, the processor 601 may perform such separate buffer-based processing of AC-specific and non-AC data packets only in designated layers of the network protocol stack. In some examples, the processor 601 may perform such separate buffer-based processing of AC-specific and non-AC data packets only in each layer of the network protocol stack.

Illustratively, for each data packet of the plurality of data packets at a layer of the network protocol stack, if the processor 601 determines that the data packet is an AC-specific data packet, the processor 601 may cause the memory 602 to store the AC-specific data packet into the first buffer. The processor 601 may perform protocol stack processing of the respective layer by processing the AC-specific data packet into the first buffer. In some examples, the processor 601 may pass processed AC-specific data packet stored within the first buffer, which the processed AC-specific data packet is output of the performed protocol stack processing, to a further layer of the network protocol stack.

For each data packet of the plurality of data packets at a layer of the network protocol stack, if the processor 601 determines that the data packet is not an AC-specific data packet (i.e. data packet is a non-AC data packet), the processor 601 may cause the memory 602 to store the non- AC data packet into the second buffer. The processor 601 may perform protocol stack processing of the respective layer by processing the non-AC data packet into the second buffer. In some examples, the processor 601 may pass processed non-AC data packet stored within the second buffer, which the processed non-AC data packet is output of the performed protocol stack processing, to a further layer of the network protocol stack.

In accordance with various aspects provided herein, the processor 601 may further provide information representing that a processed data packet is a processed AC-specific data packet to the further layer of the network protocol stack as well, which may allow the processor 601 to identify AC-specific data packets for the protocol stack processing at the further layer. In some examples, the processor 601 may also provide information representing that a processed data packet is a processed non-AC data packet to the further layer of the network protocol stack.

Correspondingly, for data packets that are not associated with any specific AC (non-AC data packets), the processor 601 can store them in a separate designated buffer in the memory 602 that is different from AC-specific buffer. For example, by using separate buffers for AC-specific packets and non-AC packets, the memory 602 may allow the processor 601 to differentiate and process these two types of data packets separately as needed at the SDAP layer and/or other layers of the protocol stack. The processor 601 can then read the AC-specific SDAP SDUs from its designated buffer, perform SDAP layer functions like mapping to QoS flows, and write the resulting SDAP PDUs to the same or a different buffer for further processing by lower layers.

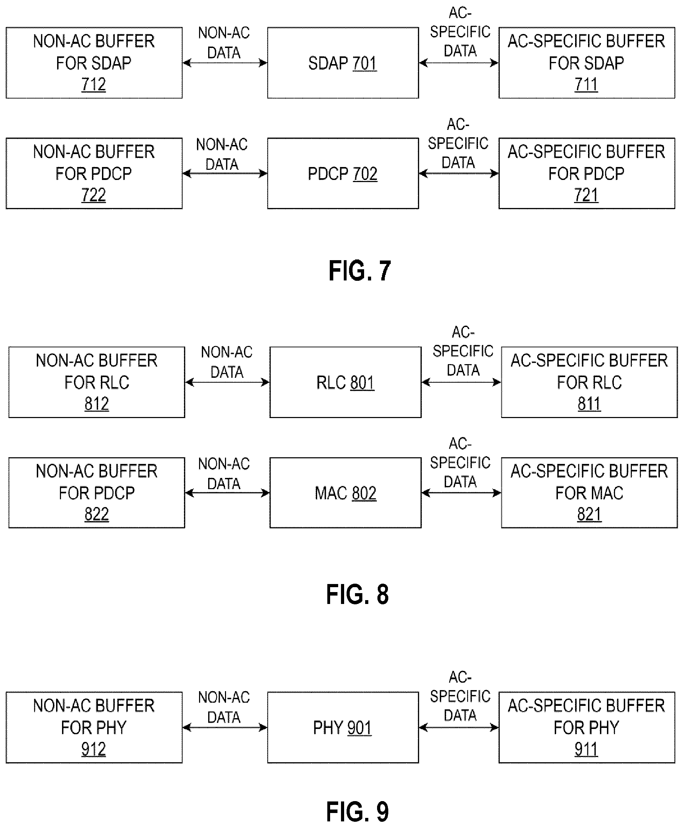

FIG. 7 shows an illustrative example of a layer-3 processing of the network protocol stack. An apparatus (e.g. the apparatus 600) may include a processor (e.g. the processor 601) and a memory (e.g. memory 602) for the layer-3 processing. Aspects are described by referring to the apparatus 600. The layer-3 processing of the network protocol stack may include SDAP 701 and PDCP 702 as described herein. The layer-3 processing may further include respective AC-specific 711, 721 and non-AC buffers 712, 722 for each SDAP and PDCP.

The apparatus 600 may receive a plurality of data packets including non-AC data packets and AC-specific data packets. Illustratively, the local DN (i.e. one or more EASs) may have sent the AC-specific data packets to the apparatus 600. In some examples, the apparatus 600 may receive at least the AC-specific data packets from the UPF (e.g. the UPF 303A). In some examples, the communication device including the apparatus 600 may further implement the UPF. The apparatus 600 may receive the plurality of data packets via the communication interface 603 and the processor 601 may obtain the plurality of data packets for the network protocol stack processing. In some examples, at least each of the AC-specific data packets, and optionally each of the non-AC data packets, may include a corresponding QFI and/or ACID. In some examples, the received data packets may be data packets of an Internet Protocol (IP) layer.

At the SDAP 701, the processor 601 may identify, for a data packet of the plurality of data packets, AC-specific data packet based on QFI and/or ACID information provided in the data packet. Illustratively, the processor 601 may, at the SDAP 701, inspect each received SDAP SDU packet from the upper layer. The processor 601 may identify the QFI field in the SDAP header. The QFI field may indicate established respective QoS flow of multiple QoS flows that the data packet may belong to. Illustratively, the memory 602 may store information mapping each QFI to a particular DRB based on packet routing configuration. Based on identification of the DRB according to the stored mapping information, the processor 601 may identify whether the data packet is a data packet of an AC or not. In some examples, the memory 602 may further store information mapping each QFI and/or DRB to a particular AC (e.g. to an ACID) at the UE side. The processor 601 may further identify the AC to which the data packet belongs to.

Additionally, or alternatively, the processor 601 may, at the SDAP 701, inspect each SDAP SDU packet from the upper layer to identify an ACID field within the SDAP SDU packet. The processor 601 may determine whether the SDAP SDU packet includes an ACID that is set to an AC. If the processor 601 determines that the SDAP SDU packet includes the ACID that is set to an AC, the processor 601 may classify the SDAP SDU packet as an AC-specific data packet. Otherwise, the processor 601 may classify the SDAP SDU packet as a non-AC data packet.

If the processor 601 determines that the SDAP SDU packet is an AC-specific data packet, the processor 601 may cause the memory 602 to store the SDAP SDU packet in the AC-specific buffer 711. The processor 601 may perform SDAP processing of that SDAP SDU packet within the AC-specific buffer 711, obtain SDAP PDU according to the SDAP processing of that SDAP SDU packet, which may be stored in the AC-specific buffer 711. If the processor 601 determines that the SDAP SDU packet is a non-AC data packet, the processor 601 may cause the memory 602 to store the SDAP SDU packet in the non-AC buffer 712. The processor 601 may perform SDAP processing of that SDAP SDU packet within the non-AC buffer 712, obtain SDAP PDU according to the SDAP processing of that SDAP SDU packet, which may be stored in the non-AC buffer 712.

The processor 601 may operate, at the PDCP 702, in a manner that is similar to the operation of the processor 601 described at the SDAP 701. Illustratively, at the PDCP 702, the processor 601 may identify, for a data packet of the plurality of data packets, AC-specific data packet based on QFI and/or ACID information provided in the data packet. Illustratively, the processor 601 may, at the PDCP 702, inspect each received PDCP SDU packet from the upper layer. The processor 601 may identify the QFI field in the PDCP header. The QFI field may indicate established respective QoS flow of multiple QoS flows that the data packet may belong to. Illustratively, the memory 602 may store information mapping each QFI to a particular DRB based on packet routing configuration. Based on identification of the DRB according to the stored mapping information, the processor 601 may identify whether the data packet is a data packet of an AC or not. In some examples, the memory 602 may further store information mapping each QFI and/or DRB to a particular AC (e.g. to an ACID) at the UE side. The processor 601 may further identify the AC to which the data packet belongs to.

Additionally, or alternatively, the processor 601 may, at the PDCP 702, inspect each PDCP SDU packet from the upper layer to identify an ACID field within the PDCP SDU packet. The processor 601 may determine whether the PDCP SDU packet includes an ACID that is set to an AC. If the processor 601 determines that the PDCP SDU packet includes the ACID that is set to an AC, the processor 601 may classify the PDCP SDU packet as an AC-specific data packet. Otherwise, the processor 601 may classify the PDCP SDU packet as a non-AC data packet.

If the processor 601 determines that the PDCP SDU packet is an AC-specific data packet, the processor 601 may cause the memory 602 to store the PDCP SDU packet in the AC-specific buffer 721. The processor 601 may perform PDCP processing of that PDCP SDU packet within the AC-specific buffer 721, obtain PDCP PDU according to the PDCP processing of that PDCP SDU packet, which may be stored in the AC-specific buffer 721. If the processor 601 determines that the PDCP SDU packet is a non-AC data packet, the processor 601 may cause the memory 602 to store the PDCP SDU packet in the non-AC buffer 722. The processor 601 may perform PDCP processing of that PDCP SDU packet within the non-AC buffer 722, obtain PDCP PDU according to the PDCP processing of that PDCP SDU packet, which may be stored in the non-AC buffer 722.

In accordance with various aspects described herein, the processor 601 may further identify whether the data packet belongs to a predetermined one or more ACs. In this example, the processor 601 may cause the memory 602 to store only the data packets belonging to the predetermined one or more ACs within the AC-specific buffer. Other data packets that does not belong to the predetermined one or more ACs may be stored in the non-AC buffer, even they may be further AC packets. Correspondingly, the processor 601 may provide a selective AC buffer-based processing specific to only some ACs. In some examples, the processor 601 may apply further configured filters for the determination causing the data packets to flow into different buffers, such as QFI or QoS flows of respective data packets.

In accordance with various aspects provided herein, the processor 601 may further generate inter-layer information to be used for processing of the data packets within lower layers of the network protocol stack. The information may represent or indicate, at least, the AC-specific packets identified by the processor 601 to be stored in the AC-specific packets. In some examples, the information may indicate the AC-specific packets stored in the AC-specific buffers. In some examples, the information may include respective identifiers for the AC-specific packets, based on which the processor 601 may identify, at the lower layers, AC-specific packets.

FIG. 8 shows an illustrative example of a layer-2 processing of the network protocol stack. An apparatus (e.g. the apparatus 600) may include a processor (e.g. the processor 601) and a memory (e.g. memory 602) for the layer-2 processing. Aspects are described by referring to the apparatus 600. The layer-2 processing of the network protocol stack may include RLC 801 and MAC 802 as described herein. The layer-2 processing may further include respective AC-specific 811, 821, and non-AC 812, 822 buffers for each RLC 801 and MAC 802. The processor 601 may perform the layer-2 processing following the layer-3 processing described in accordance with FIG. 7.

At the RLC 801, the processor 601 may identify, for a data packet of the plurality of data packets, AC-specific data packet similarly as described for the SDAP and the PDCP, but the processor 601 may not have inherent mechanisms to identify as described for the SDAP and/or the PDCP as well. The processor 601 may receive RLC SDUs from the upper PDCP layer. These RLC SDUs may originate from PDCP PDUs that have been processed by the PDCP layer, which may include information about the associated DRB and ACID. The processor 601 may use information received from upper layers (e.g. the SDAP or PDCP) to make the determination of whether the data packet belongs to an AC, which the information has been described as inter-layer information in accordance with FIG. 7.

For example, the processor 601 may, at the PDCP or the SDAP, include additional information in the PDCP PDU or SDAP PDU header to indicate the associated ACID before passing it to the RLC 801 as an RLC SDU. In some examples, the processor 601 may store information representing identifiers of identified AC-specific data packets at the SDAP or PDCP. Illustratively, such information examples may include ACID or another identifier. The processor 601 may inspect the identifying information in the received RLC SDU or based on the RLC SDU to identify if the RLC SDU include AC-specific data packet. In some examples, the processor 601 may pass the identifying information to the MAC 802.

If the processor 601 determines that the RLC SDU packet is an AC-specific data packet, the processor 601 may cause the memory 602 to store the RLC SDU packet in the AC-specific buffer 811. The processor 601 may perform RLC processing of that RLC SDU packet within the AC-specific buffer 811, obtain RLC PDU according to the RLC processing of that RLC SDU packet, which may be stored in the AC-specific buffer 811. If the processor 601 determines that the RLC SDU packet is a non-AC data packet, the processor 601 may cause the memory 602 to store the RLC SDU packet in the non-AC buffer 812. The processor 601 may perform RLC processing of that RLC SDU packet within the non-AC buffer 812, obtain RLC PDU according to the RLC processing of that RLC SDU packet, which may be stored in the non-AC buffer 812.

At the MAC 802, the processor 601 may identify, for a data packet of the plurality of data packets, AC-specific data packet similarly as described for the SDAP and the PDCP, but the processor 601 may not have inherent mechanisms to identify as described for the SDAP and/or the PDCP as well. The processor 601 may receive MAC SDUs from the RLC 801 layer. These MAC SDUs may originate from PDCP PDUs that have been processed by the PDCP layer, which may include information about the associated DRB and ACID. The processor 601 may use information received from upper layers (e.g. the SDAP or PDCP) or from RLC 801 to make the determination of whether the data packet belongs to an AC, which the information has been described as inter-layer information in accordance with FIG. 7.

For example, the processor 601 may, at the PDCP or the SDAP, include additional information in the PDCP PDU or SDAP PDU header to indicate the associated ACID before passing it to RLC 801. The processor 601, may also add, at the RLC 801, the additional information within the RLC header, which the MAC 802 may receive as an MAC SDU. In some examples, the processor 601 may store information representing identifiers of identified AC-specific data packets at the SDAP or PDCP. Illustratively, such information examples may include ACID or another identifier. The processor 601 may inspect the identifying information in the received MAC SDU or based on the MAC SDU to identify if the MAC SDU include AC-specific data packet.

If the RLC 801 has performed separate buffer-based processing for AC-specific packets based on information received from the PDCP layer and stored them in the AC-specific buffers 811, the processor 601 at the MAC 802 may also identify AC-specific MAC SDUs based on the logical channel they are received from. Illustratively, the memory 602 may store information mapping the logical channels to ACIDs, or at least mapping the logical channels to information representing whether the logical channel is used for AC packets or non-AC packets.

If the processor 601 determines that the MAC SDU packet is an AC-specific data packet, the processor 601 may cause the memory 602 to store the MAC SDU packet in the AC-specific buffer 821. The processor 601 may perform MAC processing of that MAC SDU packet within the AC-specific buffer 821, obtain MAC PDU according to the MAC processing of that MAC SDU packet, which may be stored in the AC-specific buffer 821. If the processor 601 determines that the MAC SDU packet is a non-AC data packet, the processor 601 may cause the memory 602 to store the MAC SDU packet in the non-AC buffer 822. The processor 601 may perform MAC processing of that MAC SDU packet within the non-AC buffer 822, obtain MAC PDU according to the MAC processing of that MAC SDU packet, which may be stored in the non-AC buffer 822.

In some examples, the processor 601 may further estimate transmission time interval (TTI) or predict TTI for the data packets stored in the AC-specific buffer occupancy. Illustratively, the processor 601 may use the TTI, via the MAC functions, to perform transmission scheduling for the plurality of data packets. For example, as the TTI increases, the processor 601 may, via MAC functions, increase priority of the transmission of AC-specific data packets stored in the AC-specific buffer.

FIG. 9 shows an illustrative example of a layer-1 processing of the network protocol stack. An apparatus (e.g. the apparatus 600) may include a processor (e.g. the processor 601) and a memory (e.g. memory 602) for the layer-1 processing. Aspects are described by referring to the apparatus 600. The layer-1 processing of the network protocol stack may include PHY 901 as described herein. The layer-1 processing may further include respective AC-specific 911 and non-AC 912 buffers. The processor 601 may perform the layer-1 processing following the layer-2 processing described in accordance with FIG. 8.

At the PHY 901, the processor 601 may identify, for a data packet of the plurality of data packets, AC-specific data packet similarly as described for the SDAP and the PDCP, but the processor 601 may not have inherent mechanisms to identify as described for the SDAP and/or the PDCP as well. The processor 601 may receive MAC PDUs from the MAC layer. These MAC PDUs may originate from RLC PDUs that have been processed by the RLC layer, which may include information about the associated DRB and ACID. The processor 601 may use information received from upper layers (e.g. the SDAP or PDCP or RLC or MAC) to make the determination of whether the data packet belongs to an AC, as described for the RLC or the MAC.

Illustratively, the processor 601 may, at the SDAP layer, have mapped the QoS flows to DRBs and added the corresponding Application Client ID (ACID) information. The PDCP may include this ACID in the PDCP PDU header. The RLC may then segment these PDCP PDUs into RLC PDUs, which may be then multiplexed into MAC PDUs by the MAC layer. If the processor 601 has performed the separate buffer-based processing at MAC layer as described and multiplexed RLC PDUs into separate logical channels based on the ACID information, the processor 601 at the PHY 901 layer may identify AC-specific MAC PDUs based on the logical channel they are received from.

If the processor 601 determines that the PHY SDU packet is an AC-specific data packet, the processor 601 may cause the memory 602 to store the PHY SDU packet in the AC-specific buffer 911. The processor 601 may perform PHY processing of that PHY SDU packet within the AC-specific buffer 911, obtain PHY PDU according to the PHY processing of that PHY SDU packet, which may be stored in the AC-specific buffer 911. If the processor 601 determines that the PHY SDU packet is a non-AC data packet, the processor 601 may cause the memory 602 to store the PHY SDU packet in the non-AC buffer 912. The processor 601 may perform PHY processing of that PHY SDU packet within the non-AC buffer 912, obtain PHY PDU according to the PHY processing of that PHY SDU packet, which may be stored in the non-AC buffer 912.

In accordance with various aspects described at various layers of the network protocol stack, the processor 601 may further allocate available processing resources between processing of the data packets stored in the AC-specific buffers 711, 721, 811, 821, 911 and non-AC buffers 712, 722, 812, 822, 912 at the respective layer. Illustratively, the processor 601 may allocate designated processing resources for the processing of the data packets stored in the AC-specific buffers at a layer.

Furthermore, although aspects are described for each layer, the skilled person would understand that the apparatus 600 may implement the above-mentioned AC-specific buffer-based processing for all layers, illustratively separating the general buffer used for the whole processing of the network protocol stack into an AC-specific buffer and non-AC buffer, such that the processor 601 may access to these buffers for processing of the whole network protocol stack or for multiple layers of the protocol stack. In other words, implementation-wise, the memory 602 may be configured with one AC-specific buffer and one non-AC buffer for multiple layers of the network protocol stack, and each layer may use these common AC-specific buffer and common non-AC buffer.

Illustratively, the processor 601 may include a 32-core CPU for baseband processing at the PHY 901. The processor 601 can dynamically dedicate a subset of the cores of the 32-core CPU (e.g. 2 cores out of the 32 cores), specifically for handling AC-specific data at the PHY 901 layer. The processor 601 may use the remaining 30 cores for processing non-AC data. This may allow the processor 601 to prioritize the PHY layer processing of AC-specific data, as the dedicated cores may be optimized for the typically smaller transport block sizes and lower latency requirements of AC-specific traffic. In some examples, the processor 601 may dynamically adapt this core allocation based on the real-time traffic patterns. For example, if the volume of AC-specific data increases, the processor 601 may allocate more cores from the common pool to the dedicated set for AC traffic. This dynamic allocation may provide an efficient use of the processing resources while still prioritizing the handling of critical AC-specific data at the PHY 901 layer for expedited transmission. In some examples, the processor 601 may include a Graphical Processing Unit (GPU) allocated for processing AC-specific data at the PHY 901.

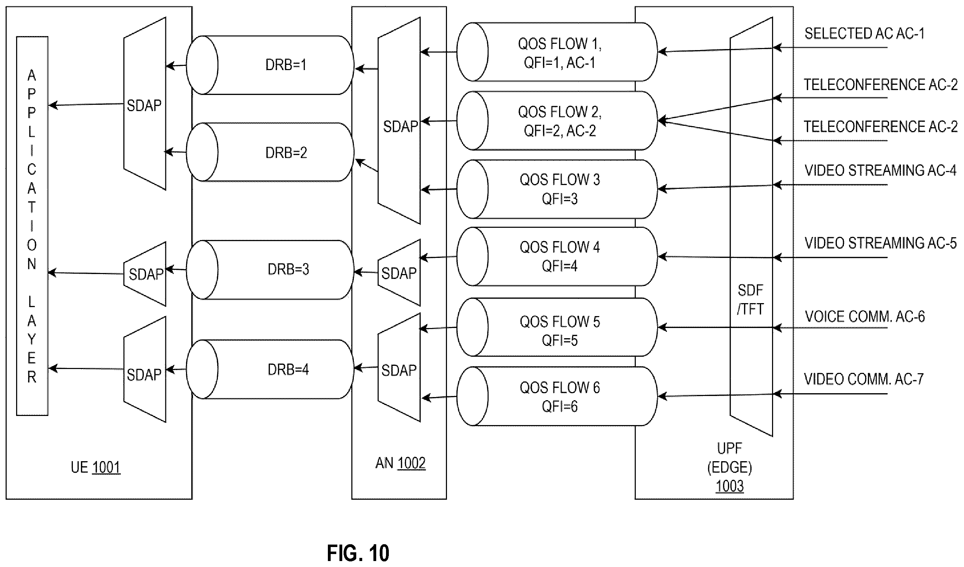

FIG. 10 shows an illustrative example of data flow between the UPF and the UE in accordance with various aspects described herein. The UE 1001 depicted herein may be the UE 301, 401. The AN 1002 depicted herein may be the AN 302 including the apparatus 600. The UPF 1003 depicted herein may be the UPF 303A. This example illustrates that the UE 1001 may have multiple logical connections to exchange data packets belonging to multiple applications. The communication is illustrated in downlink direction.

Illustratively, the UE 1001 may receive data packets at the application layer of a selected AC with ACID=AC-1, as described in accordance with various aspects, which the processor of the AN 1002 may be configured to identify and apply AC-specific processing as described herein in dedicated buffers. These data packets may be referred to selected AC data packets. The UE 1001 may further receive teleconferencing data packets associated with teleconferencing application with ACID=AC-2, noting that there are multiple data streams associated with the teleconferencing application received by the UPF 1003. The UE 1001 may further receive video streaming data packets with different ACIDs, AC-4 and AC-5. The UE 1001 may further receive voice communication data packets with ACID=AC-6 and video communication data packets with ACID=AC-7.

The UPF 1003 may receive these packets with different Internet Packet Data Units, for example via separate interfaces or gateways to the external data networks (e.g. the local DN or the DN). The UPF 1003 may manage different data flows for these packets received via different Internet PDUs and apply configured service data flow (SDF) and traffic flow template (TFT) rules at the SDF/TFT block and obtain corresponding QoS flows with corresponding QFIs as depicted. The UPF 1003 may send these data packets with their corresponding data flows as depicted to the AN 1002.

The AN 1002 may receive these respective data packets from respective QoS flows and perform the network stack processing that begins with the SDAP processing as depicted herein. Noting that the AN 1002 may be configured to identify only one ACID for AC-specific processing by storing respective data packets for that only one ACID, that is AC-1, in AC-specific buffers for the processing of the network protocol stack. Through AC-specific approach, the AN 1002 may process the selected AC data packets with priority and send it to the UE 1001 with respective DRBs, DRB=1. The AN 1002 may send data packets of QoS Flow 2 and QoS Flow 3 with DRB=2. The AN 1002 may send data packets of QoS Flow 4 with DRB=3 and QoS Flow 5 and QoS Flow 6 with DRB=4. The UE 1001 may perform network protocol stack processing for communication signals corresponding to these DRBs and obtain at SDAP layer respective SDAP SDUs, which may be passed to the application layer of the UE 1001.

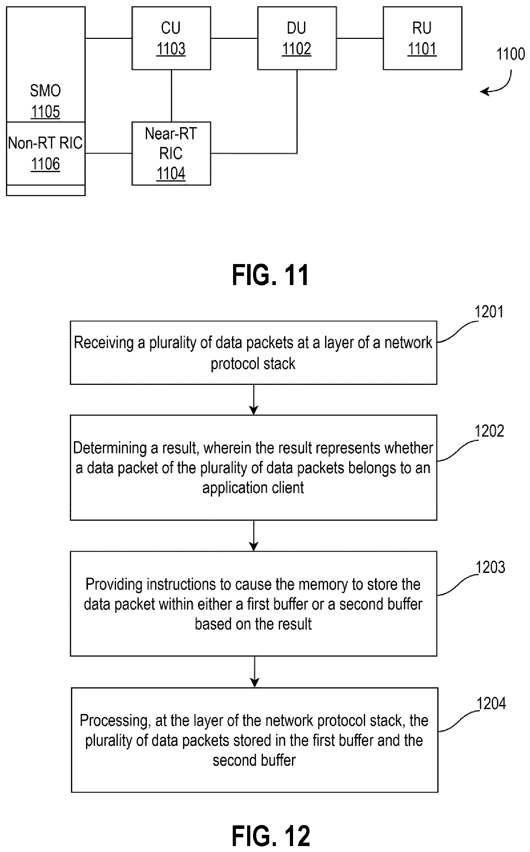

FIG. 11 shows an exemplary radio access network architecture in which the radio access network is disaggregated into multiple units. In LTE or 5G NR, network access nodes, such as a BS (e.g. the AN 302) may implement the whole network stack including physical layer (PHY), media access control (MAC), radio link control (RLC), packet data convergence control (PDCP), and radio resource control (RRC) functions of the network stack. In a distributed approach of radio access networks, the processing of the network stack is disaggregated into at least two units (e.g. into RU, DU, and CU). Although the example illustrates a distributed structure that is based on open-RAN (O-RAN) architecture, the skilled person is able to populate the teaching provided herein in other types of distributed architectures, such as baseband unit (BBU) that may operate in the cloud and may be split to a Control Unit (CU) according to Rel.15 of 3GPP standards.

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. The exemplary RAN 1100 provided herein includes a radio unit (RU) 1101, a DU 1102, a CU 1103, a near RT-RIC 1104, and a service management and orchestration framework (SMO) 1105 including a non-RT RIC 1106. The skilled person would recognize that the illustrated structure may represent a logical architecture, in which one or more of the entities of the mobile communication network may be implemented by the same physical entity, or a distributed physical entity (a plurality of devices operating collectively) may implement one of the entities of the mobile communication network provided herein.

Illustratively, the non-RT RIC 1106 may be configured to perform a functionality within SMO that drives the content carried across the A1 interface of O-RAN architecture. It includes the Non-RT RIC Framework and the Non-RT RIC Applications (rApps). The near RT-RIC 1104 may be an O-RAN Network Function (NF) that enables near-real-time control and optimization of RAN elements and resources via fine-grained data collection and actions over E2 interface. It may include AI/ML (Artificial Intelligence / Machine Learning) workflow including model training, inference, and updates. The CU 1103, may be an O-RAN CU disaggregated in an O-CU-CP being a logical node hosting the RRC and the control plane part of the PDCP protocol and an O-CU-UP being a logical node hosting the user plane part of the PDCP protocol and the SDAP protocol. The DU 1102 may be an O-DU as a logical node hosting RLC/MAC/High-PHY layers based on a lower layer functional split. The RU 1101 may be an O-RU being a logical node hosting Low-PHY layer and RF processing based on a lower layer functional split. This may be similar to 3GPP's "TRP" or "RRH" but more specific in including the Low-PHY layer (FFT/iFFT, PRACH extraction).

There are many approaches to provide the split among the multiple units. In this illustrative example, the CU 1103 (e.g. O-CU) may be mainly responsible for non-real time operations hosting the radio resource control (RRC), the PDCP protocol, and the service data adaptation protocol (SDAP). The DU (e.g. O-DU) 1102 may be mainly responsible for real-time operations hosting, for example, RLC layer functions, MAC layer functions, and Higher-PHY functions. RUs 1101 (e.g. O-RU) may be mainly responsible for hosting the Lower-PHY functions to transmit and receive radio communication signals to/from terminal devices (e.g. UEs) and provide data streams to the DU over a fronthaul interface (e.g. open fronthaul). The SMO 1105 may provide functions to manage domains such as RAN management, Core management, Transport management, and the non-RT RIC 1106 may provide functions to support intelligent RAN optimization via policy-based guidance, AI/ML model management, etc. The near-RT RIC 1104 may provide functions for real time optimizations, including hosting one or more xApps that may collect real-time information (per UE or per Cell) and provide services that may include AI/ML services as well.

The exemplary RAN 1100 is illustrated for the purpose of brevity. The skilled person would recognize the aspects provided herein and may also realize that the exemplary RAN 1100 may include further characterizations, such as the CU may also be -at least logically- distributed into two entities (e.g. CU-Control Plane, CU-User Plane), there may be various types of interfaces between different entities of the exemplary RAN 1100 (e.g. E2, F1, O1, X2, NG-u, etc.).

In accordance with the exemplary distributed RAN architecture, the CU 1103 and/or the DU 1102 depicted herein may be configured to perform aspects provided herein. Illustratively, the CU 1103 and/or the DU 1102 may include the apparatus 600.

FIG. 12 shows an example of a method. The method 1200 may include receiving 1201 a plurality of data packets at a layer of a network protocol stack; determining 1202 a result, wherein the result represents whether a data packet of the plurality of data packets belongs to an application client; providing 1203 instructions to cause the memory to store the data packet within either a first buffer or a second buffer based on the result; and processing 1204, at the layer of the network protocol stack, the plurality of data packets stored in the first buffer and the second buffer. A non-transitory computer-readable medium may include instructions which, if executed by a processor, cause the processor to perform the method 1200.

The following examples pertain to further aspects of this disclosure.

In example 1, the subject matter includes an apparatus of a communication device, the apparatus may include: a memory; a processor configured to: receive a plurality of data packets at a layer of a network protocol stack; determine a result, wherein the result represents whether a data packet of the plurality of data packets belongs to an application client; provide instructions to cause the memory to store the data packet within either a first buffer or a second buffer based on the result; process, at the layer of the network protocol stack, the plurality of data packets stored in the first buffer and the second buffer.

In example 2, the subject matter of example 1, wherein the processor is further configured to cause the memory to store the data packet within the second buffer if the result represents that the data packet does not belong to the application client; wherein the processor is further configured to cause the memory to store the data packet within the first buffer if the result represents that the data packet belongs to the application client.

In example 3, the subject matter of example 1 or example 2, wherein the processor is configured to allocate the first buffer that is dedicated for application client data.

In example 4, the subject matter of any one of examples 1 to 3, wherein the plurality of data packets includes first data packets associated with a plurality of application clients may include the application client; wherein the processor is further configured to provide instructions to cause the first buffer to store the first data packets.

In example 5, the subject matter of example 4, wherein the processor is further configured to classify the plurality of data packets into the first data packets and into second data packets, wherein the second data packets are non-application client data packets.

In example 6, the subject matter of example 5, wherein the processor is further configured to instruct the memory to store the non-application client packets into the second buffer.

In example 7, the subject matter of any one of examples 1 to 6, wherein the processor is further configured to provide information representative of one or more data packets stored in the first buffer as application client specific packets to a further layer of the network protocol stack.

In example 8, the subject matter of any one of examples 1 to 7, wherein the layer is a layer-1 (L1) or layer-2 (L2) of the network protocol stack; wherein the processor is further configured to determine the result based on information received from a higher layer of the network protocol stack.

In example 9, the subject matter of example 8, wherein the layer is L2 of the network protocol stack; wherein the processor is further configured to process data packets stored in the first buffer irrespective of available resources to process layer 1 of the network protocol stack.

In example 10, the subject matter of example 9, wherein the processor is further configured to estimate a transmission time interval for the data packet stored in the first buffer.

In example 11, the subject matter of example 8, wherein the layer is L1 of the network protocol stack; wherein the processor includes a plurality of processor cores, wherein at least one processor core of the plurality of processor cores is dedicated to process data packets stored in the first buffer.

In example 12, the subject matter of any one of examples 1 to 7, wherein the layer is a layer-3 (L3) of the network protocol stack; wherein the processor is further configured to determine the result based on at least one of a quality of service, QoS, flow identifier, QFI, or an application client identifier of the data packet.

In example 13, the subject matter of example 12, wherein the processor is further configured to process data packets stored in the first buffer irrespective of available resources to process L2 or L1 of the network protocol stack.

In example 14, the subject matter of example 12 or example 13, wherein the first buffer is a first L3 buffer and the second buffer is a second L3 buffer; wherein the processor is further configured to obtain L3 application client data packets by processing the data packets stored in the first L3 buffer; wherein the processor is further configured to provide instructions to cause the memory to store the L3 application client data packets in a dedicated L2 buffer.

In example 15, the subject matter of example 14, wherein the processor is further configured to perform L2 processing on the data packets stored in the dedicated L2 buffer to obtain L2 application client data packets; wherein the processor is further configured to provide instructions to cause the memory to store L2 application client data packets in a dedicated L1 buffer.

In example 16, the subject matter of example 15, wherein the processor is further configured to perform L1 processing on data packets stored in the dedicated L1 buffer to obtain L1 application client data packets; wherein the processor is further configured to transmit data including the L1 application client data packets of a user equipment (UE).

In example 17, the subject matter of any one of examples 1 to 16, wherein the processor is further configured to perform open radio access network (O-RAN) distributed unit (DU) functions.

In example 18, the subject matter of example 17, wherein the processor is further configured to send a plurality of processed data packets including the plurality of data packets to a O-RAN radio unit (O-RU).

In example 19, a device may include: the apparatus of any one of examples 1 to 18, a transceiver configured to receive the plurality of data packets and/or transmit communication signals may include the plurality of data packets.

In example 20, a cellular network system may include: the device of example 19; a user plane function implementing entity configured to send the plurality of data packets to the device.

In example 21, the subject matter includes a non-transitory computer-readable medium that may include instructions which, if executed by a processor, cause the processor to: receive a plurality of data packets at a layer of a network protocol stack; determine a result, wherein the result represents whether a data packet of the plurality of data packets belongs to an application client; provide instructions to cause the memory to store the data packet within either a first buffer or a second buffer based on the result; process, at the layer of the network protocol stack, the plurality of data packets stored in the first buffer and the second buffer.

In example 22, the subject matter of example 21, wherein the instructions further cause the processor to cause the memory to store the data packet within the second buffer if the result represents that the data packet does not belong to the application client; wherein the instructions further cause the processor to cause the memory to store the data packet within the first buffer if the result represents that the data packet belongs to the application client.

In example 23, the subject matter of example 21 or example 22, wherein the instructions further cause the processor to allocate the first buffer that is dedicated for application client data.

In example 24, the subject matter of any one of examples 21 to 23, wherein the plurality of data packets includes first data packets associated with a plurality of application clients may include the application client; wherein the instructions further cause the processor to provide instructions to cause the first buffer to store the first data packets.

In example 25, the subject matter of example 24, wherein the instructions further cause the processor to classify the plurality of data packets into the first data packets and into second data packets, wherein the second data packets are non-application client data packets.

In example 26, the subject matter of example 25, wherein the instructions further cause the processor to instruct the memory to store the non-application client packets into the second buffer.

In example 27, the subject matter of any one of examples 21 to 26, wherein the instructions further cause the processor to provide information representative of one or more data packets stored in the first buffer as application client specific packets to a further layer of the network protocol stack.

In example 28, the subject matter of any one of examples 21 to 27, wherein the layer is a layer-1 (L1) or layer-2 (L2) of the network protocol stack; wherein the instructions further cause the processor to determine the result based on information received from a higher layer of the network protocol stack.

In example 29, the subject matter of example 28, wherein the layer is L2 of the network protocol stack; wherein the instructions further cause the processor to process data packets stored in the first buffer irrespective of available resources to process layer 1 of the network protocol stack.

In example 30, the subject matter of example 29, wherein the instructions further cause the processor to estimate a transmission time interval for the data packet stored in the first buffer.

In example 31, the subject matter of example 28, wherein the layer is L1 of the network protocol stack; wherein the processor includes a plurality of processor cores, wherein at least one processor core of the plurality of processor cores is dedicated to process data packets stored in the first buffer.

In example 32, the subject matter of any one of examples 21 to 27, wherein the layer is a layer-3 (L3) of the network protocol stack; wherein the instructions further cause the processor to determine the result based on at least one of a quality of service, QoS, flow identifier, QFI, or an application client identifier of the data packet.

In example 33, the subject matter of example 32, wherein the instructions further cause the processor to process data packets stored in the first buffer irrespective of available resources to process L2 or L1 of the network protocol stack.

In example 34, the subject matter of example 32 or example 33, wherein the first buffer is a first L3 buffer and the second buffer is a second L3 buffer; wherein the instructions further cause the processor to obtain L3 application client data packets by processing the data packets stored in the first L3 buffer; wherein the instructions further cause the processor to provide instructions to cause the memory to store the L3 application client data packets in a dedicated L2 buffer.

In example 35, the subject matter of example 34, wherein the instructions further cause the processor to perform L2 processing on the data packets stored in the dedicated L2 buffer to obtain L2 application client data packets; wherein the instructions further cause the processor to provide instructions to cause the memory to store L2 application client data packets in a dedicated L1 buffer.

In example 36, the subject matter of example 35, wherein the instructions further cause the processor to perform L1 processing on data packets stored in the dedicated L1 buffer to obtain L1 application client data packets; wherein the instructions further cause the processor to transmit data including the L1 application client data packets of a user equipment (UE).

In example 37, the subject matter of any one of examples 21 to 36, wherein the instructions further cause the processor to perform open radio access network (O-RAN) distributed unit (DU) functions.

In example 38, the subject matter includes a method that may include: receiving a plurality of data packets at a layer of a network protocol stack; determining a result, wherein the result represents whether a data packet of the plurality of data packets belongs to an application client; providing instructions to cause the memory to store the data packet within either a first buffer or a second buffer based on the result; processing, at the layer of the network protocol stack, the plurality of data packets stored in the first buffer and the second buffer.

In example 39, the subject matter of example 38, further may include: causing the memory to store the data packet within the second buffer if the result represents that the data packet does not belong to the application client; and causing the memory to store the data packet within the first buffer if the result represents that the data packet belongs to the application client.

In example 40, the subject matter of example 38 or example 39, further may include: allocating the first buffer that is dedicated for application client data.

In example 41, the subject matter of any one of examples 38 to 40, wherein the plurality of data packets includes first data packets associated with a plurality of application clients may include the application client; wherein the method further includes: providing instructions to cause the first buffer to store the first data packets.

In example 42, the subject matter of example 41, further may include: classifying the plurality of data packets into the first data packets and into second data packets, wherein the second data packets are non-application client data packets.

In example 43, the subject matter of example 42, further may include: instructing the memory to store the non-application client packets into the second buffer.

In example 44, the subject matter of any one of examples 38 to 43, further may include: providing information representative of one or more data packets stored in the first buffer as application client specific packets to a further layer of the network protocol stack.

In example 45, the subject matter of any one of examples 38 to 44, wherein the layer is a layer-1 (L1) or layer-2 (L2) of the network protocol stack; wherein the method further includes: determining the result based on information received from a higher layer of the network protocol stack.

In example 46, the subject matter of example 45, wherein the layer is L2 of the network protocol stack; further may include: processing data packets stored in the first buffer irrespective of available resources to process layer 1 of the network protocol stack.

In example 47, the subject matter of example 46, further may include: estimating a transmission time interval for the data packet stored in the first buffer.

In example 48, the subject matter of example 45, wherein the layer is L1 of the network protocol stack; wherein the processor includes a plurality of processor cores, wherein at least one processor core of the plurality of processor cores is dedicated to process data packets stored in the first buffer.

In example 49, the subject matter of any one of examples 38 to 44, wherein the layer is a layer-3 (L3) of the network protocol stack; further may include: determining the result based on at least one of a quality of service, QoS, flow identifier, QFI, or an application client identifier of the data packet.

In example 50, the subject matter of example 49, further may include: process data packets stored in the first buffer irrespective of available resources to process L2 or L1 of the network protocol stack.

In example 51, the subject matter of example 49 or example 50, wherein the first buffer is a first L3 buffer and the second buffer is a second L3 buffer; wherein the method further includes: obtain L3 application client data packets by processing the data packets stored in the first L3 buffer; and providing instructions to cause the memory to store the L3 application client data packets in a dedicated L2 buffer.

In example 52, the subject matter of example 51, further may include: performing L2 processing on the data packets stored in the dedicated L2 buffer to obtain L2 application client data packets; wherein the method further includes: providing instructions to cause the memory to store L2 application client data packets in a dedicated L1 buffer.

In example 53, the subject matter of example 52, further may include: performing L1 processing on data packets stored in the dedicated L1 buffer to obtain L1 application client data packets; and transmitting data including the L1 application client data packets of a user equipment (UE).

In example 54, the subject matter of any one of examples 38 to 53, further may include: performing open radio access network (O-RAN) distributed unit (DU) functions.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The terminology in accordance with open-RAN (O-RAN) specifications is to be considered for Radio Units (RUs), Distributed Units (DUs) and Centralized Units (CUs). Inherently, a base station is considered to be disaggregated into such units in accordance with layers of a corresponding protocol stack into these logical nodes, which all of them can be implemented by the same device or multiple devices in which each device may be deployed with one of these units.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. An apparatus of a communication device, the apparatus comprising:
a memory; and
a processor configured to:
receive a plurality of data packets at a layer of a network protocol stack;
determine a result, wherein the result represents whether a data packet of the plurality of data packets belongs to an application client;
provide instructions to cause the memory to store the data packet within either a first buffer or a second buffer based on the result; and
process, at the layer of the network protocol stack, the plurality of data packets stored in the first buffer and the second buffer.

2. The apparatus of claim 1,
wherein the processor is further configured to cause the memory to store the data packet within the second buffer if the result represents that the data packet does not belong to the application client; and
wherein the processor is further configured to cause the memory to store the data packet within the first buffer if the result represents that the data packet belongs to the application client.

3. The apparatus of any one of claims 1 or 2,
wherein the processor is configured to allocate the first buffer that is dedicated for application client data.

4. The apparatus of any one of claims 1 to 3,
wherein the plurality of data packets comprises first data packets associated with a plurality of application clients comprising the application client; and
wherein the processor is further configured to provide instructions to cause the first buffer to store the first data packets.

5. The apparatus of claim 4,
wherein the processor is further configured to classify the plurality of data packets into the first data packets and into second data packets, wherein the second data packets are non-application client data packets.

6. The apparatus of claim 5,
wherein the processor is further configured to instruct the memory to store the non-application client packets into the second buffer.

7. The apparatus of any one of claims 1 to 6,
wherein the processor is further configured to provide information representative of one or more data packets stored in the first buffer as application client specific packets to a further layer of the network protocol stack.

8. The apparatus of any one of claims 1 to 7,
wherein the layer is a layer-1 (L1) or layer-2 (L2) of the network protocol stack; and
wherein the processor is further configured to determine the result based on information received from a higher layer of the network protocol stack.

9. The apparatus of claim 8,
wherein the layer is L2 of the network protocol stack; and
wherein the processor is further configured to process data packets stored in the first buffer irrespective of available resources to process layer 1 of the network protocol stack;
preferably wherein the processor is further configured to estimate a transmission time interval for the data packet stored in the first buffer.

10. The apparatus of any one of claims 8 or 9,
wherein the layer is L1 of the network protocol stack;
wherein the processor comprises a plurality of processor cores, wherein at least one processor core of the plurality of processor cores is dedicated to process data packets stored in the first buffer.

11. The apparatus of any one of claims 1 to 10,
wherein the layer is a layer-3 (L3) of the network protocol stack; and
wherein the processor is further configured to determine the result based on at least one of a quality of service, QoS, flow identifier, QFI, or an application client identifier of the data packet;
preferably wherein the processor is further configured to process data packets stored in the first buffer irrespective of available resources to process L2 or L1 of the network protocol stack.

12. The apparatus of claim 11,
wherein the first buffer is a first L3 buffer and the second buffer is a second L3 buffer;
wherein the processor is further configured to obtain L3 application client data packets by processing the data packets stored in the first L3 buffer; and
wherein the processor is further configured to provide instructions to cause the memory to store the L3 application client data packets in a dedicated L2 buffer.

13. The apparatus of claim 12,
wherein the processor is further configured to perform L2 processing on the data packets stored in the dedicated L2 buffer to obtain L2 application client data packets; and
wherein the processor is further configured to provide instructions to cause the memory to store L2 application client data packets in a dedicated L1 buffer;
preferably wherein the processor is further configured to perform L1 processing on data packets stored in the dedicated L1 buffer to obtain L1 application client data packets; and wherein the processor is further configured to transmit data including the L1 application client data packets of a user equipment (UE).

14. The apparatus of any one of claims 1 to 13,
wherein the processor is further configured to perform open radio access network (O-RAN) distributed unit (DU) functions;
preferably wherein the processor is further configured to send a plurality of processed data packets including the plurality of data packets to a O-RAN radio unit (O-RU).

15. A non-transitory computer-readable medium comprising instructions which, if executed by a processor, cause the processor to:
receive a plurality of data packets at a layer of a network protocol stack;
determine a result, wherein the result represents whether a data packet of the plurality of data packets belongs to an application client;
provide instructions to cause the memory to store the data packet within either a first buffer or a second buffer based on the result; and
process, at the layer of the network protocol stack, the plurality of data packets stored in the first buffer and the second buffer;
preferably wherein the instructions further cause the processor to: cause the memory to store the data packet within the second buffer if the result represents that the data packet does not belong to the application client; and cause the memory to store the data packet within the first buffer if the result represents that the data packet belongs to the application client.
